# EUROPÄISCHE PATENTSCHRIFT

(11) **EP 3 649 004 B1**
(45) Veröffentlichungstag und Bekanntmachung des Hinweises auf die Patenterteilung: **16.09.2020**
(21) Anmeldenummer: 18734756.2
(22) Anmeldetag: 12.06.2018
(51) Int. Cl.: B60K 35/00, B60K 37/06, B60R 13/02

(54) **KRAFTFAHRZEUG MIT EINEM AUSSTATTUNGSELEMENT UND EINER BEDIENVORRICHTUNG**
MOTOR VEHICLE COMPRISING AN EQUIPMENT ELEMENT AND AN OPERATING DEVICE
VÉHICULE COMPRENANT UN ÉLÉMENT D'ÉQUIPEMENT ET UN DISPOSITIF DE COMMANDE

(30) Priorität: 04.07.2017 DE 102017211310
(43) Veröffentlichungstag der Anmeldung: 13.05.2020
(73) Patentinhaber: Audi AG, 85045 Ingolstadt (DE)
(72) Erfinder: MÜLLER, Ulrich, 85055 Ingolstadt (DE); MOOR, Bettina, 71636 Ludwigsburg (DE)
(86) Internationale Anmeldenummer: PCT/EP2018/065411
(87) Internationale Veröffentlichungsnummer: WO 2019/007638

(56) Entgegenhaltungen:
- EP-A1- 2 208 645
- DE-A1-102008 044 978
- DE-A1-102012 206 661
- DE-A1-102015 120 543

## Beschreibung

Die Erfindung betrifft ein Kraftfahrzeug gemäß dem Oberbegriff des Patentanspruchs 1.

In Kraftfahrzeugen werden Bedienelemente, wie beispielsweise Schalter oder Tasten, eingesetzt, um mit diesen dem jeweiligen Bedienelement zugeordnete Vorrichtungen bedienen zu können. Beispielsweise kann durch Betätigung einer Taste als Vorrichtung eine Klimaanlage des Kraftfahrzeugs oder eine Sitzheizung aktiviert oder deaktiviert oder eingestellt werden.

In der DE 10 2014 018 456 A1 ist eine Bedienvorrichtung für ein Kraftfahrzeug beschrieben, welche als Schieberegler ausgebildet ist. Die Bedienvorrichtung umfasst einen Schieber, mit welchem in Abhängigkeit von einer Schiebestellung des Schiebers eine Fensterhöhe eines Fensters des Kraftfahrzeugs einstellbar ist. Als Vorrichtung ist mit der Bedienvorrichtung also ein Fensterheber bedienbar. Der Nachteil eines solchen Schiebers besteht darin, dass dieser in einer speziell dafür vorgesehenen Führungsnut geführt werden muss. Innerhalb dieser Führungsnut sammelt sich von Zeit zu Zeit Schmutz an, welcher die Bedienung oder Einstellung des Schiebers behindert und den Schieber in seiner Funktionalität einschränkt.

In der DE 10 2015 207 542 A1 und der DE 10 2005 047 650 A1 ist als Bedienvorrichtung ein Touchscreen beschrieben, auf dem der Nutzer an einem vorbestimmten Bereichen von mehreren vorbestimmten Bereichen des Touchscreens Bedienhandlungen, beispielsweise zur Lautstärkeregelung eines Infotainmentsystems des Kraftfahrzeugs, vornehmen kann. Der Touchscreen ist ferner in einer extra dafür vorgesehenen Haltevorrichtung im Kraftfahrzeug angeordnet. Der Nachteil einer Bedienvorrichtung als Touchscreen besteht darin, dass damit gleich mehrere Funktionen unterschiedlicher Vorrichtungen einstellbar sind. Gerade das ist während einer Fahrt des Kraftfahrzeugs für den Nutzer umständlich, da dieser sich erst vergewissern muss, an welchen der vorbestimmten Bereiche er die Bedienhandlung vorzunehmen hat. Dadurch kann der Fahrer vom Verkehrsgeschehen abgelenkt und eine Verkehrssicherheit beim Führen des Kraftfahrzeugs gefährdet werden.

Das Dokument EP 2 208 645 A1 zeigt ein weiteres Bedienelement des Stands der Technik.

Aufgabe der vorliegenden Erfindung ist es daher, ein Kraftfahrzeug mit einer Bedienvorrichtung bereitzustellen, in welchem eine Bedienvorrichtung bereitgestellt wird, welche besonders einfach und zuverlässig zu bedienen und zugleich schmutzunanfällig ist.

Diese Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figuren offenbart.

Erfindungsgemäß wird ein Kraftfahrzeug bereitgestellt, welches, insbesondere in einem Innenraum des Kraftfahrzeugs, ein Ausstattungselement umfasst. Das Kraftfahrzeug ist bevorzugt als Kraftwagen, insbesondere Personenkraftwagen, ausgebildet. Bei dem Ausstattungselement kann es sich beispielsweise um ein Armaturenbrett des Kraftfahrzeugs oder um eine Mittelkonsole des Kraftfahrzeugs oder um einen Dachhimmel des Kraftfahrzeugs oder um eine Armlehne eines Sitzes des Kraftfahrzeugs oder um eine Türinnenverkleidung des Kraftfahrzeugs handeln. Alternativ kann das Ausstattungselement auch als eine Türwange oder als Teil einer Karosserie des Kraftfahrzeugs oder als Teil einer Ladedose des Kraftfahrzeugs ausgebildet sein.
Des Weiteren umfasst das Kraftfahrzeug zumindest eine Bedienvorrichtung zum Bedienen zumindest einer Vorrichtung des Kraftfahrzeugs. Bevorzugt ist die Bedienvorrichtung der zumindest einen Vorrichtung zugeordnet. Mit anderen Worten kann mithilfe der Bedienvorrichtung ausschließlich die zumindest eine Vorrichtung bedient werden. Das Kraftfahrzeug kann auch mehrere Bedienvorrichtungen und mehrere Vorrichtungen aufweisen. Dabei kann jeweils eine Bedienvorrichtung der mehreren Bedienvorrichtungen jeweils einer Vorrichtung zugeordnet oder zugewiesen sein. Bei der Vorrichtung kann es sich um jegliche zu bedienende Vorrichtung oder zu bedienendes Gerät des Kraftfahrzeugs handeln. Beispielsweise kann es sich bei der Vorrichtung um eine Klimaanlage oder um eine Sitzheizung oder um einen Lautstärkeregler eines Infotainmentsystems des Kraftfahrzeugs oder um einen Fensterheber oder um eine Vorrichtung zur Innenraumüberwachung des Kraftfahrzeugs oder um eine Vorrichtung zur Ladekantenabsenkung des Kraftfahrzeugs oder um eine Vorrichtung zum Einfahren und/oder Ausfahren einer Anhängerkupplung des Kraftfahrzeugs oder um eine Beleuchtungsvorrichtung, insbesondere eine Innenraumbeleuchtungsvorrichtung, besonders bevorzugt um zumindest ein Leuchtmittel der Innenraumbeleuchtungsvorrichtung, handeln.

Die Bedienvorrichtung weist eine Erfassungseinrichtung zur kapazitiven Erfassung einer Bedienhandlung an einer Bedienoberfläche eines Oberflächenelements der Bedienvorrichtung auf. Beispielsweise kann die Erfassungseinrichtung zur kapazitiven Erfassung der Bedienhandlung einen kapazitiven Sensor aufweisen. Alternativ kann die Erfassungseinrichtung zur kapazitiven Erfassung der Bedienhandlung die Erfassungseinrichtung eine Sensorfolie aufweisen, welche insbesondere als Elektrodenfolie ausgebildet ist. Die Elektrodenfolie weist ein Gitter oder ein Koordinatennetz oder eine Matrix aus Elektroden auf, zwischen denen eine Kapazität gemessen wird. Die Sensorfolie kann an einer der Bedienoberfläche gegenüberliegenden Fläche oder Seite des Oberflächenelements angeordnet sein. Bei einer Annäherung beispielsweise eines Fingers des Nutzer können Feldveränderungen durch den Finger bewirkt werden, sobald er die Bedienoberfläche berührt. Dadurch kann sich das elektrostatische Feld zwischen den Elektroden ändern und zu einer messbaren Änderung in der Kapazität führen. Wenn sich der Finger des Nutzers über die Bedienoberfläche bewegt, kann sich die Kapazität an den verschiedenen Elektrodenschnittpunkten ändern. Die Änderungen können von einem Mikrokontroller erfasst und/oder erkannt werden. Mit "Bedienoberfläche" ist also insbesondere eine Fläche des Oberflächenelements gemeint, an welcher zum Beispiel der Nutzer eine Bedienung ausführt, beispielsweise die Fläche berührt oder über die Fläche fährt oder streicht. Bevorzugt ist die Bedienoberfläche dem Innenraum des Kraftfahrzeugs zugewandt.

Die Erfindung zeichnet sich dadurch aus, dass die Bedienoberfläche zumindest einen Teil einer Oberfläche des Ausstattungselements bildet. Mit anderen Worten kann die Bedienvorrichtung, insbesondere das Oberflächenelement der Bedienvorrichtung, derart in das Ausstattungselement integriert sein, dass die Bedienoberfläche einen Oberflächenbereich der Oberfläche des Ausstattungselements ausbildet.

Durch die Integration der Bedienvorrichtung in das Ausstattungselement des Kraftfahrzeugs ist für die Bedienvorrichtung keine zusätzliche Haltevorrichtung erforderlich. Zudem kann sich dadurch kein Schmutz in Rillen oder Vertiefungen oder Öffnungen der Bedienvorrichtung ansammeln. Ferner umfasst die Bedienvorrichtung keine mechanisch beweglichen Teile, da die Bedienhandlungen kapazitiv erfasst werden. Dadurch unterliegt die Bedienvorrichtung keinem Verschleiß oder kann durch eine fehlerhafte Handhabung nicht beschädigt werden. Somit ist die Bedienvorrichtung besonders robust ausgebildet.

Eine Ausführungsform der Erfindung sieht vor, dass das Oberflächenelement derart an dem Ausstattungselement angeordnet ist, dass die Oberfläche des Ausstattungselements und die Bedienoberfläche eine zusammenhängende, insbesondere plane oder gewölbte oder gekrümmte, Fläche ausbilden. Mit anderen Worten kann das Oberflächenelement der Bedienvorrichtung derart in das Ausstattungselement integriert sein, dass die Bedienoberfläche spaltfrei an die Oberfläche des Ausstattungselements anschließt. Mit anderen Worten können die Oberfläche des Ausstattungselements und die Bedienoberfläche zusammen eine gemeinsame Oberfläche ausbilden. Beispielsweise kann das Oberflächenelement Teil oder Bestandteil des Ausstattungselements sein. Dadurch kann sichergestellt werden, dass sich in dem Übergangsbereich von der Oberfläche des Ausstattungselements zu der Bedienoberfläche kein Schmutz ansammelt. Durch den nahtlosen Übergang von der Bedienoberfläche zu der Oberfläche des Ausstattungselements kann zudem sichergestellt werden, dass sich kein Wasser oder keine Feuchtigkeit in Öffnungen oder Vertiefungen der Bedienvorrichtung ansammelt. Dadurch ist die Bedienvorrichtung besonders robust und zuverlässig ausgebildet.

Erfindungsgemäß weist die Bedienvorrichtung ferner eine Steuereinrichtung auf, wobei die Steuereinrichtung dazu eingerichtet ist, in Abhängigkeit von der Bedienhandlung einen ersten Schaltzustand und einen zweiten Schaltzustand der Bedienvorrichtung einzustellen. An der Bedienvorrichtung können auch mehr als zwei Schaltzustände eingestellt werden. Die Steuereinrichtung kann beispielsweise als elektronische Schaltung oder Mikrocontroller ausgebildet sein. Mit "Schaltzustand" ist insbesondere eine Schalteinstellung der Bedienvorrichtung oder eine Schaltstellung der Bedienvorrichtung gemeint. Durch eine Änderung des Schaltzustandes kann eine Änderung, insbesondere eine Einstellungsänderung oder Funktionsänderung, an der Vorrichtung vorgenommen werden. Mit anderen Worten kann ein Schaltzustand einer Vorrichtungseinstellung der Vorrichtung zugeordnet. Beispielsweise kann in Abhängigkeit von der Bedienhandlung an der Bedienoberfläche mittels der Bedienvorrichtung die Vorrichtung in dem ersten Schaltzustand aktiviert, also eingeschaltet, und in dem zweiten Schaltzustand deaktiviert, also ausgeschaltet, werden.

Die Steuereinrichtung 1 2. ist ferner dazu eingerichtet , beim Erfassen der Bedienhandlung einen Wechsel von dem ersten Schaltzustand in den zweiten Schaltzustand oder von dem zweiten Schaltzustand in den ersten Schaltzustand durchzuführen. Wenn zum Beispiel der Nutzer eine Bedienhandlung an der Bedienoberfläche durchführt, wird durch die Steuereinrichtung der Schaltzustand der Bedienvorrichtung von dem ersten Schaltzustand in den zweiten Schaltzustand oder von dem zweiten Schaltzustand in den ersten Schaltzustand geändert. Mit anderen Worten kann die Bedienvorrichtung bistabil ausgebildet sein. Mit "bistabil" ist insbesondere eine Bistabilität der Bedienvorrichtung gemeint. Die Bedienvorrichtung kann damit zwei mögliche stabile Zustände - erster Schaltzustand und zweiter Schaltzustand - einnehmen, aber nur durch einen äußeren Impuls, also der Bedienhandlung, vom einen in den anderen Zustand wechseln. Die Bedienvorrichtung kann beispielsweise als bistabiler Schalter oder Touch-Slider ausgebildet sein. Dadurch ist die Bedienvorrichtung, insbesondere hinsichtlich einer Bedienung, besonders einfach ausgestaltet. Der Nutzer weiß genau, was er durch eine Bedienhandlung an der Vorrichtung bewirken kann. Dadurch kann ein Bedienkomfort für den Nutzer erhöht werden.

Eine vorteilhafte Weiterbildung sieht vor, dass zum Wechseln des Schaltzustandes die Erfassungseinrichtung dazu eingerichtet ist, als Bedienhandlung eine Streichbewegung zu erfassen. Mit "Streichbewegung" ist insbesondere eine Wischbewegung oder eine Schiebebewegung oder eine Slide-Bewegung gemeint. Bei der Streichbewegung fährt oder streicht der Nutzer beispielsweise mit seinem Finger über die Bedienoberfläche. Beispielsweise kann der Nutzer mit seinem Finger von einer vorbestimmten Position, insbesondere einer Startposition, auf der Bedienoberfläche zum Einstellen des ersten Schaltzustandes zu einer Endposition, insbesondere nach rechts, streichen. Dabei kann der Nutzer seinen Finger eine vorbestimmte Distanz nach rechts bewegen. Zum Einstellen des zweiten Schaltzustandes kann der Nutzer mit seinem Finger von einer weiteren vorbestimmten Position, beispielsweise der Endposition, auf der Bedienoberfläche zum Einstellen des ersten Schaltzustandes, beispielsweise nach links, zu einer weiteren Endposition, beispielsweise der Startposition, streichen. Dabei kann der Nutzer seinen Finger eine vorbeststimmte Distanz, insbesondere nach links, bewegen. Insbesondere kann der Nutzer seinen Finger zum Einstellen des ersten Schaltzustandes oder zum Wechseln des zweiten Schaltzustandes in den ersten Schaltzustand von der Endposition zu der Startposition zurückbewegen.

Alternativ kann es vorgesehen sein, dass zum Wechseln des Schaltzustandes die Erfassungseinrichtung dazu eingerichtet ist, als Bedienhandlung eine Berührung, insbesondere an einer vorbestimmten Position oder Stelle auf der Bedienoberfläche, zu erfassen. Mit Berührung ist insbesondere eine Touch-Bewegung gemeint. Dabei kann dem ersten Schaltzustand eine erste vorbestimmte Position auf der Bedienoberfläche und dem zweiten Schaltzustand eine zweite vorbestimmte Position auf der Bedienoberfläche zugeordnet sein. Ist beispielsweise gerade der erste Schaltzustand der Bedienvorrichtung eingestellt und erfasst die Erfassungseinrichtung eine Berührung an der zweiten Position, so kann die Steuereinrichtung dazu eingerichtet sein, einen Wechsel von dem ersten Schaltzustand in den zweiten Schaltzustand durchzuführen. Durch eine derartige Ausgestaltung der Bedienhandlung ist die Bedienvorrichtung besonders einfach zu bedienen.

Erfindungsgemäß weist die Bedienvorrichtung ferner eine Leuchteinrichtung auf, wobei die Leuchteinrichtung dazu eingerichtet ist, das Oberflächenelement zu hinterleuchten. Die Leuchteinrichtung kann dazu auf einem dem Innenraum des Kraftfahrzeugs abgewandten Seite des Oberflächenelements, also insbesondere auf einer Rückseite des Oberflächenelements, angeordnet sein. Mit "Hinterleuchten" ist insbesondere gemeint, dass das Oberflächenelement von der Rückseite her ausgeleuchtet wird. Durch das Hinterleuchten kann der Nutzer beim Auffinden oder beim Bedienen der Bedienvorrichtung, insbesondere bei Dunkelheit, unterstützt werden.

Weiter erfindungsgemäß weist die Leuchteinrichtung ein erstes Leuchtmittel und ein zweites Leuchtmittel auf, wobei die Steuereinrichtung dazu eingerichtet ist, die beiden Leuchtmittel in Abhängigkeit von dem Schaltzustand anzusteuern. Durch die Leuchtmittel erhält der Nutzer ein direktes Feedback zu seiner Bedienhandlung, insbesondere zu dem aktuellen Schaltzustand der Bedienvorrichtung oder Einstellung der Vorrichtung.

Die erfindungsgemäße Ausführungsform sieht vor, dass das erste Leuchtmittel einem ersten vorbestimmten Oberflächenbereich des Oberflächenelements zugeordnet ist, wobei der erste vorbestimmte Oberflächenbereich aus einem transparenten, lichtleitenden Material gebildet ist, wobei das erste Leuchtmittel dazu eingerichtet ist, den ersten vorbestimmten Oberflächenbereich, insbesondere ausschließlich, in dem ersten Schaltzustand mit einer ersten Lichtfarbe auszuleuchten. Sobald der erste Schaltzustand aktiviert ist, ist die Steuereinrichtung insbesondere dazu eingerichtet, das erste Leuchtmittel zum Ausleuchten oder Hinterleuchten des ersten vorbestimmten Oberflächenbereichs anzusteuern, sodass der erste vorbestimmte Oberflächenbereich nur das erste Leuchtmittel ausgeleuchtet wird. Mit "transparent" ist insbesondere gemeint, dass der erste Oberflächenbereich lichtdurchlässig, also durchlässig für Licht im sichtbaren Wellenlängenbereich, oder durchsichtig oder transluzent ausgebildet ist. Mit "lichtleitend" ist insbesondere gemeint, dass der erste vorbestimmte Oberflächenbereich als Lichtleiter ausgebildet ist. Bevorzugt ist der erste vorbestimmte Oberflächenbereich aus Kunststoff oder Glas gebildet.

Weiter erfindungsgemäß ist es vorgesehen, dass das zweite Leuchtmittel einem zweiten vorbestimmten Oberflächenbereich des Oberflächenelements zugeordnet ist, wobei der zweite vorbestimmte Oberflächenbereich aus einem transparenten, lichtleitenden Material gebildet ist, wobei das zweite Leuchtmittel dazu eingerichtet ist, zweiten vorbestimmten Oberflächenbereich, insbesondere ausschließlich, in dem zweiten Schaltzustand mit einer zweiten Lichtfarbe auszuleuchten. Insbesondere handelt es sich bei dem zweiten vorbestimmten Oberflächenbereich um einen von dem ersten vorbestimmten Oberflächenbereich des Oberflächenelements verschiedenen Oberflächenbereich. Insbesondere wird der zweite Oberflächenbereich mit einer von der ersten Lichtfarbe verschiedenen zweiten Lichtfarbe ausgeleuchtet. Die Steuereinrichtung ist also bevorzugt dazu eingerichtet, die Leuchteinrichtung derart anzusteuern, dass das erste Leuchtmittel in dem ersten Schaltzustand der Bedienvorrichtung Licht in einer ersten Lichtfarbe zum Ausleuchten des ersten vorbestimmten Oberflächenbereichs und das zweite Leuchtmittel in dem zweiten Schaltzustand Licht in einer von der ersten Lichtfarbe verschiedenen zweiten Lichtfarbe zum Ausleuchten des zweiten vorbestimmten Oberflächenbereichs emittiert.

Sobald der zweite Schaltzustand aktiviert ist, ist die Steuereinrichtung insbesondere dazu eingerichtet, das zweite Leuchtmittel zum Ausleuchten oder Hinterleuchten des zweiten vorbestimmten Oberflächenbereichs anzusteuern, sodass der zweite vorbestimmte Oberflächenbereich nur durch das zweite Leuchtmittel ausgeleuchtet wird. Mit "transparent" ist insbesondere gemeint, dass der zweite Oberflächenbereich lichtdurchlässig, also durchlässig für Licht im sichtbaren Wellenlängenbereich, oder durchsichtig oder transluzent ausgebildet ist. Mit "lichtleitend" ist insbesondere gemeint, dass der zweite vorbestimmte Oberflächenbereich als Lichtleiter ausgebildet ist. Bevorzugt ist der zweite vorbestimmte Oberflächenbereich aus Kunststoff oder Glas gebildet.

Bevorzugt kann in dem Oberflächenelement jeweils eine Kontur als erster Oberflächenbereich und zweiter Oberflächenbereich ausgebildet sein. Eine erste Kontur kann den ersten Oberflächenbereich und eine zweite Kontur kann den zweiten Oberflächenbereich bilden. Die Kontur kann dabei lichtleitend und transparent ausgebildet sein. Die Kontur kann zum Beispiel eine Zahl und/oder ein Buchstabe und/oder ein Wort und/oder ein Symbol mit einer geometrischen Form, wie beispielsweise ein Kreis oder ein Rechteck, darstellen. Die jeweilige Kontur wird bevorzugt mit dem zugehörigen Leuchtmittel ausgeleuchtet.

Eine weitere vorteilhafte Ausführungsform sieht vor, dass das restliche Oberflächenelement aus einem lichtundurchlässigen Material gebildet ist. Mit "lichtundurchlässig" ist insbesondere gemeint, dass das restliche Oberflächenelement undurchsichtig oder opak ausgebildet ist. mit "restlichem Oberflächenelement" ist bevorzugt das Oberflächenelement ohne den ersten vorbestimmten Oberflächenbereich und den zweiten vorbestimmten Oberflächenbereich gemeint. Bevorzugt ist das restliche Oberflächenelement aus Kunststoff gebildet.

Erfindungsgemäß bildet ein Teil des ersten vorbestimmten Oberflächenbereich einen Teil des zweiten Oberflächenbereichs, wobei die sich überlappenden Teile des ersten Oberflächenbereichs und des zweiten Oberflächenbereichs einen Teil der Bedienoberfläche einfassen, wobei die Erfassungseinrichtung dazu eingerichtet ist, die Bedienhandlung an dem eingefassten Teil der Bedienoberfläche zu erfassen. Mit anderen Worten kann ein Bereich des ersten Oberflächenbereichs mit einem Bereich des zweiten Oberflächenbereichs übereinstimmen. Mit anderen Worten bildet ein Bereich des ersten Oberflächenbereichs einen gleichen Bereich des zweiten Oberflächenbereichs aus. Dieser Bereich oder Teil des ersten Oberflächenbereichs und des zweiten Oberflächenbereichs kann so ausgestaltet sein, dass dieser einen Teil der Bedienoberfläche einrahmt oder umrandet. Besonders bevorzugt ist die Erfassungseinrichtung diesem Teil zugeordnet. Bevorzugt kann die Sensorfolie an einer Rückseite des eingefassten Teils des Oberflächenelements angeordnet sein. Bevorzugt kann die Erfassungseinrichtung nur an dem eingefassten Teil der Bedienoberfläche die Bedienhandlung sensieren oder erfassen. Durch die Einfassung kann sich der Nutzer besonders einfach orientieren und wird bei seiner Bedienhandlung unterstützt.

Gemäß einer vorteilhaften Weiterbildung weist die Bedienvorrichtung ferner eine Ausgabeeinrichtung auf, wobei die Ausgabeeinrichtung dazu eingerichtet ist, ein akustisches Signal auszugeben, wobei die Steuereinrichtung dazu eingerichtet ist, die Ausgabeeinrichtung beim Wechseln des Schaltzustandes zum Ausgeben des akustischen Signals anzusteuern. Sobald also die Bedienvorrichtung von dem ersten Schaltzustand in den zweite Schaltzustand oder von dem zweiten Schaltzustand in den ersten Schaltzustand wechselt, kann die Steuereinrichtung die Ausgabeeinrichtung zum Ausgeben oder Emittieren eines akustischen Signals ansteuern. Die Ausgabeeinrichtung kann beispielsweise einen Lautsprecher und/oder einen Akustikgeber aufweisen. Als akustisches Signal kann insbesondere ein Ton oder ein Geräusch, wie beispielsweise ein Pfeif-Ton oder ein Klick-Ton, ausgegeben werden. Durch das akustische Signal erhält der Nutzer eine direkte Rückmeldung auf seine Bedienhandlung hin.

Im Folgenden sind Ausführungsbeispiele der Erfindung beschrieben. Hierzu zeigt:
- Fig. 1: eine schematische Darstellung einer Bedienvorrichtung für ein Kraftfahrzeug in einer Perspektivansicht;
- Fig. 2: eine schematische Darstellung einer Bedienhandlung an der Bedienvorrichtung aus Fig. 1 durch einen Nutzer; und
- Fig. 3: eine schematische Darstellung eines Kraftfahrzeugs mit einem Innenraum und mehreren an einem Armaturenbrett des Kraftfahrzeugs angeordneten Bedienvorrichtungen.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

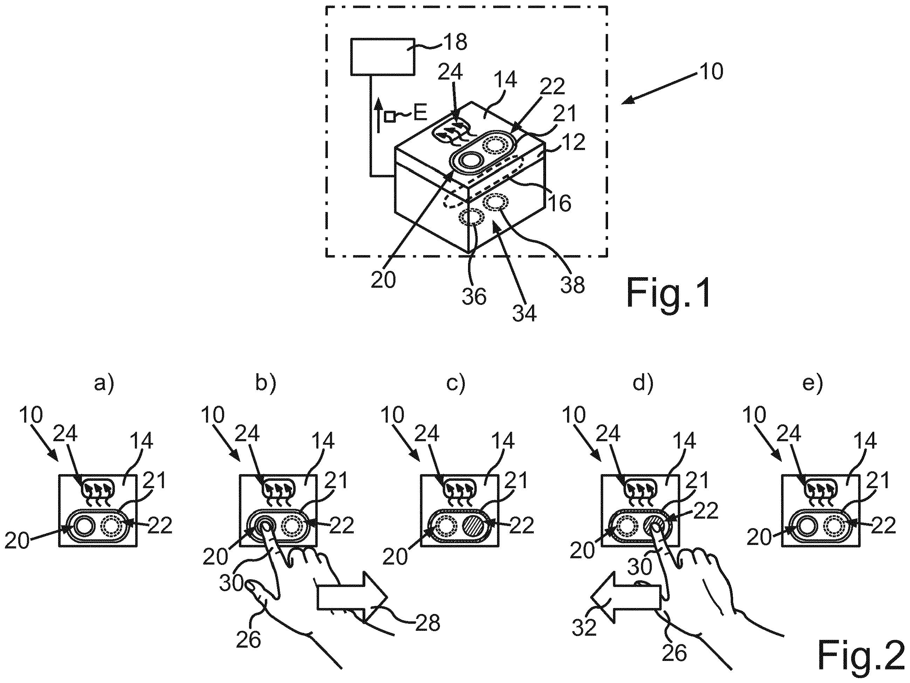

Fig. 1 zeigt in einer schematischen Darstellung eine Bedienvorrichtung 10 für ein Kraftfahrzeug. Die Bedienvorrichtung 10 ist mit einer Vorrichtung (in Figuren nicht gezeigt) oder einem Gerät des Kraftfahrzeugs gekoppelt. Die Bedienvorrichtung 10 ist dazu eingerichtet, die Vorrichtung zu bedienen, also eine Einstellung an der Vorrichtung vorzunehmen. Beispielsweise kann mithilfe der Bedienvorrichtung eine Einstellung der Vorrichtung getätigt werden. Beispielsweise kann es sich bei der Vorrichtung um eine Klimaanlage oder um eine Sitzheizung oder um einen Lautstärkeregler eines Infotainmentsystems des Kraftfahrzeugs oder um einen Fensterheber oder um eine Vorrichtung zur Innenraumüberwachung des Kraftfahrzeugs oder um eine Vorrichtung zur Ladekantenabsenkung des Kraftfahrzeugs oder um eine Vorrichtung zum Einfahren und/oder Ausfahren einer Anhängerkupplung des Kraftfahrzeugs oder um eine Beleuchtungsvorrichtung, insbesondere eine Innenraumbeleuchtungsvorrichtung, besonders bevorzugt um zumindest ein Leuchtmittel der Innenraumbeleuchtungsvorrichtung, handeln.

Die Bedienvorrichtung 10 weist ein Oberflächenelement 12 mit einer Bedienoberfläche 14 auf. Das Oberflächenelement 12 ist dabei plattenförmig ausgebildet. An der Bedienoberfläche 14 kann eine Bedienhandlung oder können mehrere Bedienhandlungen, beispielsweise durch einen Nutzer, ausgeführt werden. Ferner weist die Bedienvorrichtung 10 eine Erfassungseinrichtung 16 und eine Steuereinrichtung 18 auf. Die Erfassungseinrichtung 16 ist dazu eingerichtet oder ausgebildet, die Bedienhandlung an der Bedienoberfläche 14 zu erfassen.

Sobald die Erfassungseinrichtung 16 eine Bedienhandlung an der Bedienoberfläche 14 erfasst oder detektiert, ist die Erfassungseinrichtung 16 dazu eingerichtet, ein Erfassungssignal E an die Steuereinrichtung 18 zu übermitteln. Dazu kann die Erfassungseinrichtung 16 mit der Steuereinrichtung 18 gekoppelt sein.

Die Erfassungseinrichtung 16 ist dazu eingerichtet, die Bedienhandlung an der Bedienoberfläche 14 kapazitiv zu erfassen. Dazu kann die Erfassungseinrichtung 16 beispielsweise eine Sensorfolie aufweisen. Die Erfassungseinrichtung 16 ist ferner an einer der Bedienoberfläche 14 gegenüberliegenden Rückseite des Oberflächenelements 12 angeordnet. Beispielsweise kann die Sensorfolie an die Rückseite des Oberflächenelements 12 geklebt sein. Bevorzugt ist die Sensorfolie an der Stelle an der Rückseite des Oberflächenelements 12 angebracht, an der an der Bedienoberfläche 14 eine Bedienhandlung erfasst werden soll.

Das Oberflächenelement 12 ist in mehrere Bereiche unterteilt. In diesem Fall weist das Oberflächenelement 12 drei vorbestimmte Oberflächenbereiche - einen ersten vorbestimmten Oberflächenbereich 20, einen zweiten vorbestimmten Oberflächenbereich 22 und einen dritten vorbestimmten Oberflächenbereich 24 - auf. Der in Fig. 1 gezeigte weitere Bereich 21 ist gemeinsam durch den ersten vorbestimmten Oberflächenbereich 20 und den zweiten vorbestimmten Oberflächenbereich 22 gebildet. Mit anderen Worten überlappen sich in diesem weiteren Bereich 21 der erste vorbestimmte Oberflächenbereich 20 und der zweite vorbestimmte Oberflächenbereich 22. Mit anderen Worten bilden der erste vorbestimmte Oberflächenbereich 20 und der zweite vorbestimmte Oberflächenbereich 22 zusammen diesen weiteren Bereich 21 aus. Alle drei vorbestimmten Oberflächenbereiche 20, 22, 24 sind durch eine Kontur in dem Oberflächenelement 12 gebildet. Die drei vorbestimmten Oberflächenbereiche 20, 22, 24 erstrecken sich von der Bedienoberfläche 14 durch das Oberflächenelement 12 zu einer der Bedienoberfläche 14 gegenüberliegenden Rückseite. Mit anderen Worten durchdringt die jeweilige Kontur der drei vorbestimmten Oberflächenbereiche 20, 22, 24 das Oberflächenelement 12 vollständig. Bevorzugt sind alle drei vorbestimmten Oberflächenbereiche 20, 22, 24 und der weitere Bereich 21 aus einem transparenten, lichtleitenden Material gebildet. Das übrige Oberflächenelement ist aus einem undurchsichtigen Material gebildet. Das Oberflächenelement 12 bildet trotz der mehreren Oberflächenbereiche einen Körper aus. Beispielsweise kann das Oberflächenelement 12 aus Kunststoff gebildet sein.

Der erste vorbestimmte Oberflächenbereich 20 und der zweite vorbestimmte Oberflächenbereich 22 weisen eine kreisförmige oder ringförmige Kontur oder Form auf. Der weitere Bereich 21 fasst einen Bereich der Bedienoberfläche 14 des Oberflächenelements 12 ein. Dabei sind auch die ring- oder kreisförmigen Bereiche des ersten vorbestimmten Oberflächenbereichs 20 und des zweiten vorbestimmten Oberflächenbereichs 22 durch den Bereich 21 eingefasst oder eingerahmt. Mit anderen Worten befinden sich die ring- oder kreisförmigen Bereiche des ersten vorbestimmten Oberflächenbereichs 20 und des zweiten vorbestimmten Oberflächenbereichs 22 innerhalb des weiteren Bereichs 21. Der weitere Bereich 21 weist eine ovale Form oder Kontur auf. Bevorzugt ist Erfassungseinrichtung 16 durch dem durch den weiteren Bereich 21 eingerahmten Bereich der Bedienoberfläche 14 zugeordnet. Mit anderen Worten kann die Bedienhandlung innerhalb des eingefassten oder eingerahmten Bereichs an der Bedienoberfläche 14 erfasst werden. Der dritte vorbestimmte Oberflächenbereich 24 ist als ein Symbol ausgebildet. Das Symbol weist die Kontur eines Rechtecks und drei Pfeile auf. Dieses durch den dritten vorbestimmten Oberflächenbereich 24 dargestellte Symbol soll eine Funktion der durch die Bedienvorrichtung 10 bedienbaren oder einstellbaren Vorrichtung symbolisieren. In diesem Fall die Heckscheibenheizung.

Fig. 2 zeigt eine Bedienhandlung an der Bedienvorrichtung 10 durch einen Nutzer 26. Im Zusammenhang von Fig. 1 und Fig. 2 soll auf die Bedienhandlung beziehungsweise die Bedienung der Bedienvorrichtung 10 näher eingegangen werden.

In Abhängigkeit von der Bedienhandlung wird ein ersten Schaltzustand oder ein zweiter Schaltzustand der Bedienvorrichtung 10 eingestellt. In Fig. 2 befindet sich die Bedienvorrichtung 10 in Abschnitt a) in dem ersten Schaltzustand. In Abschnitt b) führt der Nutzer 26 die Bedienhandlung aus. Dabei führt der Nutzer 26 als Bedienhandlung eine Streichbewegung in die Richtung des Pfeils 28 durch. Bei der Streichbewegung streicht der Nutzer 26 mit seinem Finger 30 von einer vorbestimmten Position, insbesondere einer Startposition, auf der Bedienoberfläche 14 entlang der Bedienoberfläche 14 zu einer Endposition. Bei der Startposition in Abschnitt b) befindet sich der Finger 30 des Nutzers 26 auf dem ersten vorbestimmten Oberflächenbereich 20 innerhalb des Bereichs 21. Zum Erreichen der Endposition bewegt der Nutzer 26 den Finger 30 in Richtung des Pfeils 28. Bei der Endposition in Abschnitt b) befindet sich der Finger 30 des Nutzers 26 auf dem zweiten vorbestimmten Oberflächenbereich 22 innerhalb des Bereichs 21. Sobald die Erfassungseinrichtung 16 die Streichbewegung, also die Bewegung des Fingers 30 des Nutzers 26 von der Startposition zu der Endposition, erfasst hat, wird durch die Steuereinrichtung 18 ein Wechsel von dem ersten Schaltzustand in den zweiten Schaltzustand durchgeführt.

In Abschnitt c) und Abschnitt d) von Fig. 2 befindet sich die Bedienvorrichtung 10 in dem zweiten Schaltzustand. Beispielsweise kann der Nutzer 26 durch die Bedienhandlung die Vorrichtung aktivieren und/oder deaktivieren. In dem ersten Schaltzustand ist die Vorrichtung beispielsweise deaktiviert, also ausgeschaltet. In dem zweiten Schaltzustand ist die Vorrichtung beispielsweise aktiviert, also eingeschaltet. Um die Bedienvorrichtung 10 von dem zweiten Schaltzustand wieder in den ersten Schaltzustand zurückzuführen kann durch den Nutzer 26 eine weitere Bedienhandlung durchgeführt werden. Dabei führt der Nutzer 26 als weitere Bedienhandlung eine Streichbewegung in die Richtung des Pfeils 32 durch. Bei der Streichbewegung streicht der Nutzer 26 mit seinem Finger 30 von der Endposition oder einer weiteren vorbestimmten Position auf der Bedienoberfläche 14 entlang der Bedienoberfläche 14 zurück zu der Startposition. Nach dem Ausführen der weiteren Bedienhandlung befindet sich die Bedienvorrichtung 10 wieder in dem ersten Schaltzustand, wie in Abschnitt e) gezeigt ist.

An der Bedienvorrichtung 10 können auch mehr als zwei Schaltzustände, beispielsweise zur Lautstärkeregelung, eingestellt werden. Beispielsweise können sich innerhalb des weiteren Bereichs 21 Zwischenpositionen zwischen der Startposition und der Endposition befinden, welche jeweils als ein weiterer Schaltzustand durch die Erfassungseinrichtung 16 erfasst werden können,.

Damit der Nutzer 26 während der Bedienhandlung an der Bedienoberfläche 14 bei der Bedienung der Bedienvorrichtung 10 unterstützt wird, ist das Oberflächenelement 12 hinterleuchtet. Dazu weist die Bedienvorrichtung 10 eine Leuchteinrichtung 34 mit einem ersten Leuchtmittel 36 und einem zweiten Leuchtmittel 38 auf. Die Steuereinrichtung 18 der Bedienvorrichtung 10 ist dabei dazu eingerichtet, die Leuchtmittel 36, 38 der Leuchteinrichtung 34 unabhängig voneinander zu steuern. Das erste Leuchtmittel und das zweite Leuchtmittel können beispielsweise jeweils eine LED aufweisen. Das erste Leuchtmittel ist dabei dem ersten vorbestimmten Oberflächenbereich 20 zugeordnet. Das zweite Leuchtmittel 38 ist dem zweiten vorbestimmten Oberflächenbereich 22. Ferner kann das erste Leuchtmittel 36 und/oder das zweite Leuchtmittel 38 dem weiteren Bereich 21 zugeordnet sein. Das erste Leuchtmittel 36 ist dazu eingerichtet, ausschließlich den ersten vorbestimmten Oberflächenbereich 20 auszuleuchten oder zu hinterleuchten. Das zweite Leuchtmittel 38 ist dazu eingerichtet, ausschließlich den zweiten vorbestimmten Oberflächenbereich 22 auszuleuchten oder zu hinterleuchten. Ferner ist das erste Leuchtmittel 36 dazu eingerichtet, den ersten vorbestimmten Oberflächenbereich 20 in dem ersten Schaltzustand der Bedienvorrichtung 10 mit einer ersten Lichtfarbe auszuleuchten. Das zweite Leuchtmittel 38 ist dazu eingerichtet, ausschließlich den zweiten vorbestimmten Oberflächenbereich 22 in dem zweiten Schaltzustand mit einer zweiten Lichtfarbe, insbesondere von der ersten Lichtfarbe verschiedenen zweiten Lichtfarbe, auszuleuchten. In dem ersten Schaltzustand wird auch der weitere Bereich 21 durch das erste Leuchtmittel 36 ausgeleuchtet. In dem zweiten Schaltzustand wird auch der weitere Bereich 21 durch das zweite Leuchtmittel 38 ausgeleuchtet. In dem ersten Schaltzustand ist das zweite Leuchtmittel 38 ausgeschaltet oder deaktiviert. In dem zweiten Schaltzustand ist das erste Leuchtmittel 36 ausgeschaltet oder deaktiviert. Beispielsweise wird der erste vorbestimmte Oberflächenbereich 20 und der weitere Bereich 21 in dem ersten Schaltzustand durch das erste Leuchtmittel 36 weiß oder rot als erste Lichtfarbe ausgeleuchtet. Der zweite vorbestimmte Oberflächenbereich 20 und der weitere Bereich 21 können in dem zweiten Schaltzustand durch das zweite Leuchtmittel 36 beispielsweise in grün als zweite Lichtfarbe ausgeleuchtet werden. Ferner kann die Leuchteinrichtung 34 ein weiteres Leuchtmittel (in Figuren nicht dargestellt) aufweisen, welches dazu eingerichtet ist, ausschließlich den dritten vorbestimmten Oberflächenbereich 24 auszuleuchten. Dabei kann im Betrieb der Bedienvorrichtung 10 die Steuereinrichtung 18 dazu eingerichtet sein, dass weitere Leuchtmittel derart anzusteuern, dass der dritte vorbestimmte Oberflächenbereich 24, also das Symbol, durchgehend durch das weitere Leuchtmittel ausgeleuchtet wird. Beispielsweise kann der dritte vorbestimmte Oberflächenbereich 24 mit dem weiteren Leuchtmittel in weiß ausgeleuchtet werden.

Wie in Fig. 2 gezeigt, wird die Bedienvorrichtung 10, insbesondere das Oberflächenelement 12, in dem ersten Schaltzustand (Abschnitt a), b) und e)) durch das erste Leuchtmittel 36 ausgeleuchtet. In dem zweiten Schaltzustand (Abschnitt c) und d)) wird die Bedienvorrichtung 10, insbesondere das Oberflächenelement 12, durch das zweite Leuchtmittel 38 ausgeleuchtet.

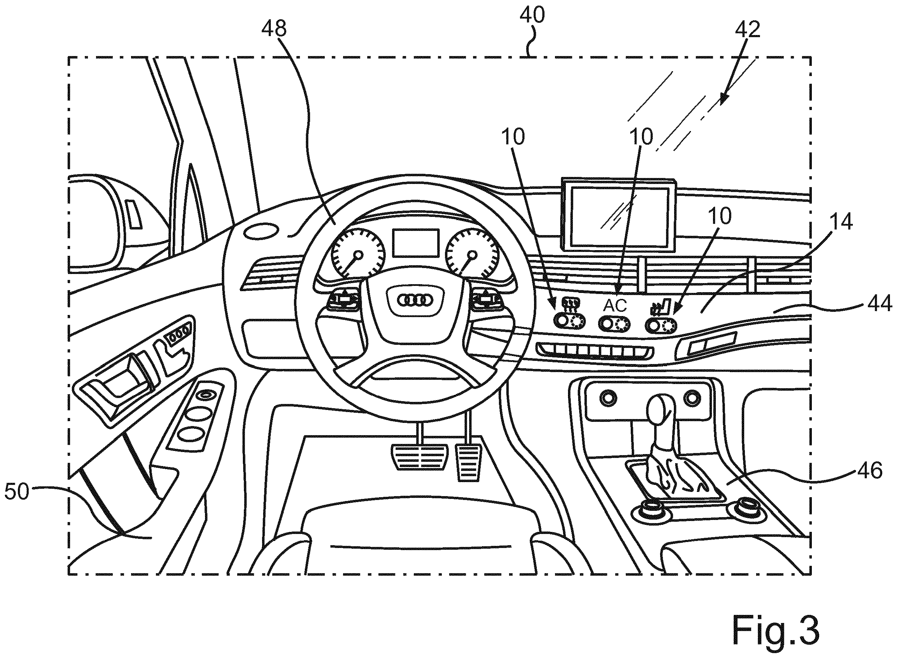

In Fig. 3 ist ein Kraftfahrzeug 40 mit einem Innenraum 42 gezeigt. In dem Innenraum 42 des Kraftfahrzeugs 40 befinden sich an einem Armaturenbrett 44 drei nebeneinander angeordnete Bedienvorrichtungen 10. Die Bedienvorrichtungen 10 sind analog zu der in Fig. 1 oder Fig. 2 beschriebenen Bedienvorrichtung 10 ausgebildet. Die jeweiligen Bedienvorrichtungen 10 unterscheiden sich jeweils durch das durch den dritten vorbestimmten Oberflächenbereich 24 dargestellte Symbol. Zusätzlich oder alternativ kann die Bedienvorrichtung 10 oder können mehrere Bedienvorrichtung auch an einer Mittelkonsole 46 des Kraftfahrzeugs 40 und/oder an dem Lenkrad 48 das Kraftfahrzeugs 40 und/oder an einer Türinnenverkleidung 50 des Kraftfahrzeugs 40 angeordnet sein. Die Bedienvorrichtung 10 kann also an einem Ausstattungselement, wie beispielsweise dem Armaturenbrett 44, angeordnet sein.

Die jeweilige Bedienvorrichtung 10 ist jeweils einer Vorrichtung des Kraftfahrzeugs 40 zugeordnet. Das Kraftfahrzeug 40 kann, wie bereits erläutert, auch mehrere Bedienvorrichtungen 10 aufweisen, wobei jeweils eine Bedienvorrichtung 10 der mehreren Bedienvorrichtungen 10 jeweils einer Vorrichtung zugeordnet oder zugewiesen ist.

Die Bedienvorrichtung 10 ist dabei derart an dem Ausstattungselement, wie beispielsweise dem Armaturenbrett 44, angeordnet, dass die Bedienoberfläche 14 der Bedienvorrichtung 10 einen Teil einer Oberfläche des Ausstattungselements bildet. Dabei kann das Oberflächenelement 12 der Bedienvorrichtung 10 derart an dem Ausstattungselement, wie beispielsweise dem Armaturenbrett 44, angeordnet sein, dass die Oberfläche des Ausstattungselements und die Bedienoberfläche 14 eine zusammenhängende, insbesondere plane oder gewölbte, Fläche ausbilden.

Insgesamt zeigen die Beispiele, wie durch die Erfindung ein bistabiler Touch-Slider als Schalter, insbesondere in einem Kraftfahrzeug, bereitgestellt wird.

## Patentansprüche

1. Kraftfahrzeug (40) umfassend:
- ein Ausstattungselement des Kraftfahrzeugs (40),
- zumindest eine Bedienvorrichtung (10) zum Bedienen zumindest einer Vorrichtung des Kraftfahrzeugs (40), wobei die Bedienvorrichtung (10) an dem Ausstattungselement angeordnet ist, wobei
- die Bedienvorrichtung (10) eine Erfassungseinrichtung (16) zur kapazitiven Erfassung einer Bedienhandlung an einer Bedienoberfläche (14) eines Oberflächenelements (12) der Bedienvorrichtung (10) aufweist, wobei
- die Bedienoberfläche (14) zumindest einen Teil einer Oberfläche des Ausstattungselements bildet, wobei
- die Bedienvorrichtung (10) ferner eine Leuchteinrichtung (34) aufweist, wobei die Leuchteinrichtung (34) dazu eingerichtet ist, das Oberflächenelement (12) zu hinterleuchten,
wobei
- die Bedienvorrichtung (10) ferner eine Steuereinrichtung (18) aufweist, wobei die Steuereinrichtung (18) dazu eingerichtet ist, in Abhängigkeit von der Bedienhandlung einen ersten Schaltzustand und einen zweiten Schaltzustand der Bedienvorrichtung (10) einzustellen, wobei die Steuereinrichtung (18) ferner dazu eingerichtet ist, beim Erfassen der Bedienhandlung einen Wechsel von dem ersten Schaltzustand in den zweiten Schaltzustand oder von dem zweiten Schaltzustand in den ersten Schaltzustand durchzuführen, **dadurch gekennzeichnet, dass**
- durch den Wechsel von dem zweiten Schaltzustand in den ersten Schaltzustand beim Erfassen der Bedienhandlung die Bedienvorrichtung bistabil ausgebildet ist,
- die Leuchteinrichtung (34) ein erstes Leuchtmittel (36) und ein zweites Leuchtmittel (38) aufweist, wobei die Steuereinrichtung (18) dazu eingerichtet ist, die beiden Leuchtmittel (36, 38) in Abhängigkeit von dem Schaltzustand anzusteuern, wobei
- das erste Leuchtmittel (36) einem ersten vorbestimmten Oberflächenbereich (20) des Oberflächenelements (12) zugeordnet ist, wobei der erste vorbestimmte Oberflächenbereich (20) aus einem transparenten, lichtleitenden Material gebildet ist, wobei das erste Leuchtmittel (36) dazu eingerichtet ist, den ersten vorbestimmten Oberflächenbereich (20) in dem ersten Schaltzustand mit einer ersten Lichtfarbe auszuleuchten, wobei
- das zweite Leuchtmittel (38) einem zweiten vorbestimmten Oberflächenbereich (22) des Oberflächenelements (12) zugeordnet ist, wobei der zweite vorbestimmte Oberflächenbereich (22) aus einem transparenten, lichtleitenden Material gebildet ist, wobei das zweite Leuchtmittel (38) dazu eingerichtet ist, den zweiten vorbestimmten Oberflächenbereich (22) in dem zweiten Schaltzustand mit einer zweiten Lichtfarbe auszuleuchten, wobei
- ein Teil des ersten vorbestimmten Oberflächenbereichs einen Teil des zweiten Oberflächenbereichs bildet, wobei die sich überlappenden Teile des ersten Oberflächenbereichs und des zweiten Oberflächenbereichs einen Teil der Bedienoberfläche einfassen, wobei die Erfassungseinrichtung dazu eingerichtet ist, die Bedienhandlung an dem eingefassten Teil der Bedienoberfläche zu erfassen.

2. Kraftfahrzeug (40) nach Anspruch 1,
**dadurch gekennzeichnet, dass**
das Oberflächenelement (12) derart an dem Ausstattungselement angeordnet ist, dass die Oberfläche des Ausstattungselements und die Bedienoberfläche (14) eine zusammenhängende Fläche ausbilden.

3. Kraftfahrzeug (40) nach einem der vorhergehenden Ansprüche,
**dadurch gekennzeichnet, dass**
zum Wechseln des Schaltzustandes die Erfassungseinrichtung (16) dazu eingerichtet ist, als Bedienhandlung eine Streichbewegung an der Bedienoberfläche (14) zu erfassen.

4. Kraftfahrzeug (40) nach einem der vorhergehenden Ansprüche,
**dadurch gekennzeichnet, dass**
die Bedienvorrichtung (10) ferner eine Ausgabeeinrichtung aufweist, wobei die Ausgabeeinrichtung dazu eingerichtet ist, ein akustisches Signal auszugeben, wobei die Steuereinrichtung (18) dazu eingerichtet ist, die Ausgabeeinrichtung beim Wechseln des Schaltzustandes zum Ausgeben des akustischen Signals anzusteuern.

5. Kraftfahrzeug (40) nach einem der vorhergehenden Ansprüche,
**dadurch gekennzeichnet, dass**
das Ausstattungselement als Armaturenbrett (44) des Kraftfahrzeugs (40) oder als Türinnenverkleidung (50) des Kraftfahrzeugs (40) oder als eine Mittelkonsole (46) des Kraftfahrzeugs (40) oder als ein Dachhimmels des Kraftfahrzeugs (40) oder als eine Armlehne eines Sitzes des Kraftfahrzeugs (40) oder als eine Türwange des Kraftfahrzeugs (40) ausgebildet ist.

## Claims

1. Motor vehicle (40) comprising:
- an equipment element of the motor vehicle (40),
- at least one operating device (10) for operating at least one device of the motor vehicle (40), wherein the operating device (10) is arranged on the equipment element, wherein
- the operating device (10) has a detecting device (16) for the capacitive detection of an operator action on an operating surface (14) of a surface element (12) of the operating device (10), wherein
- the operating surface (14) forms at least a part of a surface of the equipment element, wherein
- the operating device (10) has furthermore a lighting device (34), wherein the lighting device (34) is configured to backlight the surface element (12), wherein
- the operating device (10) has furthermore a control device (18), wherein the control device (18) is configured depending on the operator action to set a first switching state and a second switching state of the operating device (10), wherein the control device (18) is furthermore configured, when the operator action is undertaken to implement a change from the first switching state into the second switching state or from the second switching state into the first switching state, **characterised in that**
- by means of the change from the second switching state into the first switching date when the operator action is undertaken the operating device is formed bistable,
- the lighting device (34) has a first lighting means (36) and a second lighting means (38), wherein the control device (18) is configured to control the two lighting means (36, 38) depending on the switching state, wherein
- the first lighting means (36) is assigned to a first predetermined surface area (20) of the surface element (12), wherein the first predetermined surface area (20) is formed from a transparent, light-conducting material, wherein the first lighting means (36) is configured to illuminate the first predetermined surface area (20) in the first switching state with a first light colour, wherein
- the second lighting means (38) is assigned to a second predetermined surface area (22) of the surface element (12), wherein the second predetermined surface area (22) is formed from a transparent, light-conducting material, wherein the second lighting means (38) is configured to illuminate the second predetermined surface area (22) in the second switching state with a second light colour, wherein
- a part of the first predetermined surface area forms a part of the second surface area, wherein the overlapping parts of the first surface area and the second surface area include a part of the operating surface, wherein the detecting device is configured to detect the operator action on the included part of the operating surface.

2. Motor vehicle (40) according to claim 1,
**characterised in that**
the surface element (12) is arranged on the equipment element such that the surface of the equipment element and the operating surface (14) form a continuous surface.

3. Motor vehicle (40) according to any of the preceding claims,
**characterised in that**
for changing the switching state the detecting device (16) is configured to detect as an operator action a swiping movement on the operating surface (14).

4. Motor vehicle (40) according to any of the preceding claims,
**characterised in that**
the operating element (10) has furthermore an output device, wherein the output device is configured to output an acoustic signal, wherein the control device (18) is configured to control the output device to output the acoustic signal when changing the switching state.

5. Motor vehicle (40) according to any of the preceding claims,
**characterised in that**
the equipment element is designed as an instrument panel (44) of the motor vehicle (40) or as a door inner cladding (50) of the motor vehicle (40) or as a middle console (46) of the motor vehicle (40) or as a roof lining of the motor vehicle (40) or as an armrest of a seat of the motor vehicle (40) or as a door panel of the motor vehicle (40).

## Revendications

1. Véhicule automobile (40) comprenant :
- un élément d'équipement du véhicule automobile (40),
- au moins un dispositif d'actionnement (10) pour l'actionnement d'au moins un dispositif du véhicule automobile (40), dans lequel le dispositif d'actionnement (10) est agencé au niveau de l'élément d'équipement, dans lequel
- le dispositif d'actionnement (10) présente un dispositif de détection (16) pour la détection capacitive d'une opération d'actionnement au niveau d'une surface d'actionnement (14) d'un élément de surface (12) du dispositif d'actionnement (10), dans lequel
- la surface d'actionnement (14) forme au moins une partie d'une surface de l'élément d'équipement, dans lequel
- le dispositif d'actionnement (10) présente en outre un dispositif d'éclairage (34), dans lequel le dispositif d'éclairage (34) est aménagé pour rétroéclairer l'élément de surface (12),
dans lequel
- le dispositif d'actionnement (10) présente en outre un dispositif de commande (18), dans lequel le dispositif de commande (18) est aménagé pour régler en fonction de l'opération d'actionnement un premier état de commutation et un deuxième état de commutation du dispositif d'actionnement (10), dans lequel le dispositif de commande (18) est aménagé en outre pour réaliser lors de la détection de l'opération d'actionnement un changement du premier état de commutation au deuxième état de commutation ou du deuxième état de commutation au premier état de commutation, **caractérisé en ce que**
- par le passage du deuxième état de commutation au premier état de commutation lors de la détection de l'opération d'actionnement, le dispositif d'actionnement est réalisé de manière bistable,
- le dispositif d'éclairage (34) présente un premier moyen d'éclairage (36) et un deuxième moyen d'éclairage (38), dans lequel le dispositif de commande (18) est aménagé pour commander les deux moyens d'éclairage (36, 38) en fonction de l'état de commutation, dans lequel
- le premier moyen d'éclairage (36) est associé à une première zone de surface prédéterminée (20) de l'élément de surface (12), dans lequel la première zone de surface prédéterminée (20) est formée d'un matériau photoconducteur transparent, dans lequel le premier moyen d'éclairage (36) est aménagé pour éclairer la première zone de surface prédéterminée (20) dans le premier état de commutation avec une première couleur de lumière, dans lequel
- le deuxième moyen d'éclairage (38) est associé à une deuxième zone de surface prédéterminée (22) de l'élément de surface (12), dans lequel la deuxième zone de surface prédéterminée (22) est formée d'un matériau photoconducteur transparent, dans lequel le deuxième moyen d'éclairage (38) est aménagé pour éclairer la deuxième zone de surface prédéterminée (22) dans le deuxième état de commutation avec une deuxième couleur de lumière, dans lequel
- une partie de la première zone de surface prédéterminée forme une partie de la deuxième zone de surface, dans lequel les parties se chevauchant de la première zone de surface et de la deuxième zone de surface bordent une partie de la surface d'actionnement, dans lequel le dispositif de détection est aménagé pour détecter l'opération d'actionnement au niveau de la partie bordée de la surface d'actionnement.

2. Véhicule automobile (40) selon la revendication 1,
**caractérisé en ce que**
l'élément de surface (12) est agencé au niveau de l'élément d'équipement de sorte que la surface de l'élément d'équipement et la surface d'actionnement (14) forment une surface cohérente.

3. Véhicule automobile (40) selon l'une quelconque des revendications précédentes,
**caractérisé en ce que**
pour changer l'état de commutation, le dispositif de détection (16) est aménagé pour détecter un mouvement d'effleurement au niveau de la surface d'actionnement (14) en tant qu'opération d'actionnement.

4. Véhicule automobile (40) selon l'une quelconque des revendications précédentes,
**caractérisé en ce que**
le dispositif d'actionnement (10) présente en outre un dispositif d'émission, dans lequel le dispositif d'émission est aménagé pour émettre un signal acoustique, dans lequel le dispositif de commande (18) est aménagé pour commander le dispositif d'émission lors du changement de l'état de commutation pour l'émission du signal acoustique.

5. Véhicule automobile (40) selon l'une quelconque des revendications précédentes,
**caractérisé en ce que**
l'élément d'équipement est réalisé en tant que tableau de bord (44) du véhicule automobile (40) ou en tant qu'habillage intérieur de porte (50) du véhicule automobile (40) ou en tant que console centrale (46) du véhicule automobile (40) ou en tant que pavillon du véhicule automobile (40) ou en tant qu'accoudoir d'un siège du véhicule automobile (40) ou tant que joue de porte du véhicule automobile (40)
